(19) Europäisches Patentamt
European Patent Office
Office européen des brevets

(11) **EP 3 648 382 B1**

(12) **FASCICULE DE BREVET EUROPEEN**

(45) Date de publication et mention
de la délivrance du brevet:
**30.03.2022 Bulletin 2022/13**

(21) Numéro de dépôt: **19205919.4**

(22) Date de dépôt: **29.10.2019**

(51) Classification Internationale des Brevets (IPC):
**H04L 1/00** *(2006.01)* **H04L 7/00** *(2006.01)*
**G06F 13/38** *(2006.01)*

(52) Classification Coopérative des Brevets (CPC):
**H04L 1/0045; G06F 13/42; H04L 1/0061;
H04L 7/0008**

(54) **PROCÉDÉ ET SYSTÈME POUR LA TRANSMISSION DE DONNÉES DE MANIÈRE FIABLE**

VERFAHREN UND SYSTEM FÜR DIE VERTRAUENSWÜRDIGE DATENÜBERTRAGUNG

METHOD AND SYSTEM FOR RELIABLE DATA TRANSMISSION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **31.10.2018 FR 1801150**

(43) Date de publication de la demande:
**06.05.2020 Bulletin 2020/19**

(73) Titulaire: **Thales**
**92400 Courbevoie (FR)**

(72) Inventeurs:
• **ANDRADE ALFONSECA, Damián**
**78401 CHATOU CEDEX (FR)**
• **TEIXEIRA, Tony**
**78401 CHATOU CEDEX (FR)**
• **GUGUEN, Stéphane**
**78401 CHATOU CEDEX (FR)**

(74) Mandataire: **Marks & Clerk France**
**Immeuble "Visium"**
**22, avenue Aristide Briand**
**94117 Arcueil Cedex (FR)**

(56) Documents cités:
EP-A1- 0 805 574 WO-A1-2014/116931
US-A- 5 600 662 US-A- 5 687 193
US-A1- 2005 081 129

## Description

L'invention concerne un procédé pour transmettre des données de manière fiable, assurant qu'à la réception les données correspondent aux données émises. Elle s'applique notamment pour transmettre des données dans un système comprenant plusieurs équipements synchrones dont les horloges peuvent présenter une dérive. Le procédé peut être utilisé dans des systèmes qui doivent fournir simultanément de l'énergie à une machine tournante.

Dans le cas de transmission d'informations simultanées, la fiabilité dans la transmission des données est indispensable pour assurer un bon fonctionnement du système.

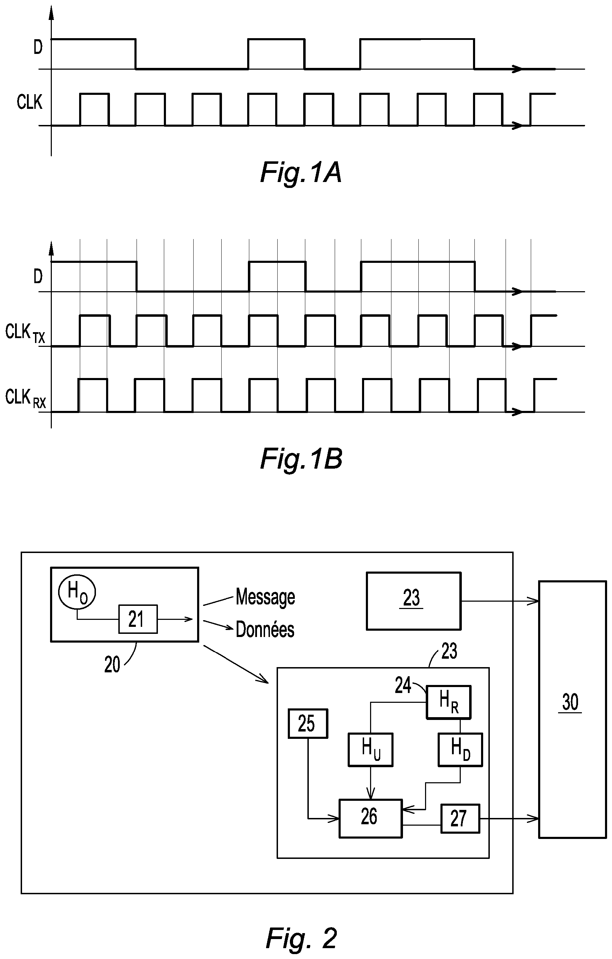

Lorsque la transmission de données de manière simultanée entre plusieurs équipements est nécessaire pour assurer cette fiabilité, il est connu d'utiliser un bus de communication pour transmettre les données et un bus pour transmettre une horloge pour synchroniser la transmission des données. La figure 1A schématise ce type d'architecture avec une ligne de transmission pour les données D et l'utilisation d'une horloge CLK dédiée pour synchroniser la transmission. Ceci nécessite une implantation d'un câblage supplémentaire.

Dans le cas d'équipements qui ne sont pas synchronisés par une horloge commune aux différents équipements (sans horloge distribuée), les équipements doivent avoir la même fréquence de fonctionnement et une tolérance sur les horloges de chaque équipement restreinte, afin d'éviter une dérive trop importante de l'instant de réception des données sur chacun des équipements. Dans ce cas, comme il est schématisé à la figure 1B, un décalage (déphasage) entre l'horloge d'émission $CLK_{TX}$ des données et l'horloge de réception $CLK_{RX}$ des données peut apparaître. En général, le front montant ou descendant de l'horloge de l'équipement récepteur est utilisé pour s'assurer que la lecture des données se fait correctement.

D'autre part, lors de la transmission de données, des perturbations sur la ligne de transmission peuvent provoquer la lecture d'un bit faux, ce qui peut induire une mauvaise détection d'un bit de démarrage pour la lecture. Dans ce cas, la lecture du message est erronée. Si le système comprend un moyen de correction de type CRC, le message sera tout simplement rejeté. Le système peut alors répéter la transmission du message jusqu'à obtenir un bon résultat. Cette méthode présente comme inconvénient de diminuer la bande passante utile.

Le document EP0805574 divulgue un système pour générer un signal d'horloge qui est synchronisé sur des données reçues sur le récepteur.

La demande de brevet US 2005/0081129 divulgue un procédé de correction d'erreur dans la lecture de bits.

L'idée de la présente invention repose sur une nouvelle approche pour la lecture des données qui exploite notamment des fronts d'horloge choisis et consécutifs de deux horloges générées à partir d'une première horloge initiale fonctionnant à une valeur de fréquence au moins égale à deux fois la fréquence de transmission des données.

L'invention concerne un procédé pour transmettre des données de manière fiable à au moins un équipement pourvu d'une horloge initiale $H_1$ dans un système comprenant au moins un équipement émetteur de message travaillant avec une première horloge $H_0$ caractérisé en ce qu'il comporte au moins les étapes suivantes :

A partir de son horloge initiale $H_1$, à une fréquence initiale $F_1$ un équipement génère au moins une première horloge $H_{1U}$ à partir d'un front montant de l'horloge initiale $H_1$ avec une fréquence $F_{1U}$ et une deuxième horloge $H_{1D}$ à partir d'un front descendant de l'horloge initiale $H_1$, avec une fréquence $F_{1D}$, Les valeurs des fréquences sont, par exemple, définies de la manière suivante :

$$F_{1U} = F_{1D} = \frac{F_1}{2} = F_0 \pm \frac{F_0}{N_0}$$

avec $F_0$ la fréquence initiale correspondant à l'équipement émetteur et $N_0$ le nombre de bits du message,

L'équipement exécute ensuite les étapes suivantes :

Lire les données reçues en utilisant la première horloge $H_{1U}$ à une fréquence $F_{1U}$ et la deuxième horloge $H_{1D}$ à une fréquence $F_{1D}$ et en utilisant au moins un premier front montant de la première horloge $H_{1U}$ suivi d'un front descendant de la première horloge $H_{1U}$ consécutif du premier front montant de la première horloge générée $H_{1U}$, puis un premier front montant de la deuxième horloge $H_{1D}$ suivi d'un front descendant de la deuxième horloge $H_{1D}$ consécutif du premier front montant de la deuxième horloge générée $H_{1D}$, les quatre fronts d'horloge utilisés étant consécutifs,
Décoder au moins les quatre messages en utilisant un code correcteur d'erreur,
Lorsqu'au moins un message est décodé correctement, utiliser les informations contenues dans ce message pour piloter un dispositif en liaison avec le ou lesdits équipements.

Le pilotage peut être une régulation dans le fonctionnement d'un dispositif.

La communication des données se fait, par exemple, en utilisant un protocole de communication mettant en œuvre une correction de type code correcteur d'erreur CRC.

Les valeurs des fréquences sont, par exemple, définies de la manière suivante :

$$F_{1U} = F_{1D} = \frac{F_1}{2} = F_0 \pm \frac{F_0}{N_0}$$

avec $F_0$ la fréquence initiale correspondant à l'équipement émetteur et $N_0$ le nombre de bits du message.

Le procédé selon l'invention est mis en œuvre pour des onduleurs fournissant de l'énergie à une machine tournante, de manière synchronisée.

L'invention concerne aussi un système pour transmettre des données de manière fiable à au moins un équipement configuré pour piloter un dispositif, le système comprenant un dispositif ayant une horloge $H_0$ fonctionnant à une fréquence $F_0$ caractérisé en ce qu'un équipement comporte au moins les éléments suivants :

Un module générateur d'horloge configuré pour générer à partir de l'horloge initiale $H_1$ de l'équipement, à une fréquence initiale $F_1$, au moins une première horloge $H_{1U}$ à partir d'un front montant de l'horloge initiale $H_1$, avec une fréquence $F_{1U}$ et une deuxième horloge $H_{1D}$ à partir d'un front descendant de l'horloge initiale $H_1$, avec une fréquence $F_{1D}$,

Les valeurs des fréquences sont, par exemple, définies de la manière suivante :

$$F_{1U} = F_{1D} = \frac{F_1}{2} = F_0 \pm \frac{F_0}{N_0}$$

avec $F_0$ la fréquence initiale correspondant à l'équipement émetteur et $N_0$ le nombre de bits du message,

Un module de traitement des données configuré pour :

lire les données reçues en utilisant au moins un premier front montant de la première horloge $H_{1U}$ et un front descendant de la première horloge $H_{1U}$ consécutif du premier front montant de la première horloge générée $H_{1U}$, puis lire les données reçues en utilisant un premier front montant de la deuxième horloge $H_{1D}$ et un front descendant de la deuxième horloge $H_{1D}$ consécutif du premier front montant de la deuxième horloge générée $H_{1D}$, les quatre fronts d'horloge utilisés étant consécutifs de $2F_1$, et décoder au moins les quatre messages en utilisant un code correcteur d'erreur,

Si la vérification du message avec le code correcteur d'erreur CRC est correcte, utiliser les informations contenues dans le message pour générer un signal de commande vers un dispositif en liaison avec le ou lesdits équipements.

Le dispositif émetteur de données est configuré, par exemple, pour utiliser un protocole de communication ayant un correcteur d'erreur CRC.

Le dispositif émetteur de données est en liaison avec plusieurs onduleurs configurés pour générer de l'énergie, de manière synchrone, et fournir ladite énergie à une machine tournante.

D'autres caractéristiques et avantages de la présente invention apparaîtront mieux à la lecture de la description d'exemples de réalisation donnés à titre illustratif et nullement limitatif, annexée des figures qui représentent :

- Figure 1A, une illustration de l'utilisation d'une horloge dédiée pour la lecture de données et figure 1B, de l'utilisation de deux horloges selon l'art antérieur,
- Figure 2, un exemple de mise en œuvre de l'invention,
- Figure 3, un schéma illustrant la génération des deux horloges selon le procédé de l'invention, et
- Figure 4, un exemple de chronogramme pour la lecture des données utilisant le procédé selon l'invention.

Afin de bien faire comprendre le procédé selon l'invention, l'exemple qui suit est donné à titre illustratif et nullement limitatif pour un système comprenant plusieurs onduleurs qui sont configurés pour fournir de la puissance (énergie) à une machine tournante, tel qu'il est représenté à la figure 2. Ces onduleurs doivent être en mesure de fournir de manière simultanée la puissance, afin d'éviter des retours de puissance par les fils qui pourraient être néfastes au fonctionnement, et au contraire d'avoir un cumul de l'énergie. Sur la figure 2 pour des raisons de simplification, seul le détail du lien d'un équipement onduleur a été représenté.

La figure 2 comprend un dispositif 20 émetteur de données D, comprenant au moins une horloge $H_0$ fonctionnant à une fréquence $F_0$ et un module d'émission de données 21.

Les données D contenues dans un message M sont transmis au moyen d'un protocole de communication, connu de l'homme du métier et qui ne sera pas détaillé, à un équipement 23 tel qu'un onduleur configuré, par exemple, pour générer de l'énergie au niveau d'une machine tournante 30. L'équipement configuré pour générer de l'énergie comporte une horloge $H_R$, un module générateur 24 de deux horloges $H_{1D}$, $H_{1U}$, à partir d'une première horloge initiale

$H_1$, un module récepteur du message 25, un module de traitement des données 26, tel qu'un processeur, qui va traiter les données reçues au rythme des deux horloges, en utilisant des fronts d'horloge suivant les étapes du procédé selon l'invention décrit ci-après, afin de déterminer la ou les données correctement lues ou décodées. Ces données seront utilisées par un module générateur d'énergie 27 pour émettre de la puissance sur réception d'un signal de commande vers la machine tournante 30.

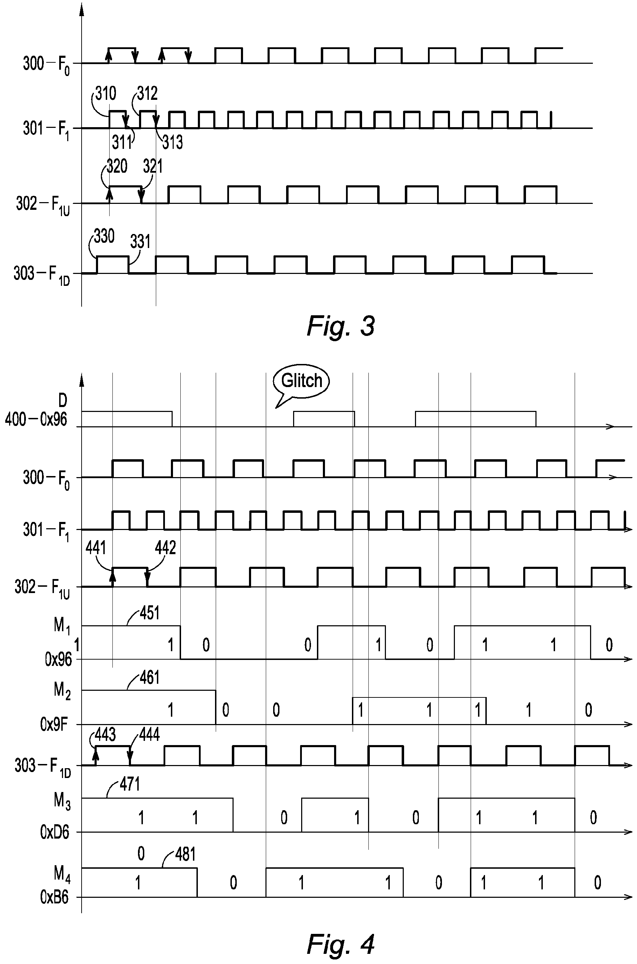

La figure 3 illustre un exemple pour la génération des deux horloges obtenues à partir de l'horloge initiale de fonctionnement d'un équipement et qui seront utilisées pour la lecture des données reçues par l'équipement.

| 300 | Horloge de l'équipement émetteur à une fréquence $F_0$ |
|---|---|
| 301 | Horloge de l'équipement récepteur à une fréquence initiale $F_1$ |
| 302 | Horloge générée sur les fronts montants à une fréquence $F_{1U}$ |
| 303 | Horloge générée sur les fronts descendants à une fréquence $F_{1D}$ |

Le module de génération d'horloge considère l'horloge initiale $H_1$ du module récepteur de l'équipement et génère :

- une première horloge $H_{1U}$ en considérant un premier front montant 310 de l'horloge initiale $H_1$ pour générer un premier front montant 320 de la première horloge $H_{1U}$, un deuxième front montant 312 de l'horloge initiale $H_1$ pour générer un premier front descendant 321 avec une fréquence $F_{1U}$,
- une deuxième horloge $H_{1D}$ en considérant un premier front descendant 311 de l'horloge initiale $H_1$ pour générer un premier front montant 330 de la deuxième horloge $H_{1D}$, un deuxième front descendant 313 de l'horloge initiale $H_1$ pour générer un premier front descendant 331 de la deuxième horloge $H_{1D}$ avec une fréquence $F_{1D}$.

La figure 4 illustre le séquencement de la lecture des données à partir des deux horloges $H_{1U}$ et $H_{1D}$.

L'équipement émetteur du dispositif émetteur de données envoie un message de données D, 400, d'une taille de $N_0$ bits à une fréquence $F_0$, 300. La transmission peut se faire en utilisant un protocole de communication connu de l'homme du métier, mettant en œuvre une méthode de vérification de la transmission de données de type CRC (Cyclic Redondancy Check), par exemple.

L'horloge initiale $H_1$ du module récepteur de l'équipement fonctionne à une fréquence $F_1$, 301 et a permis de générer une première horloge $H_{1U}$, 302, et une deuxième horloge $H_{1D}$, 303, comme il a été expliqué précédemment à la figure 3.

La fréquence $F_1$ est égale à $2F_0$ avec une erreur $< 2\frac{F_0}{N_0}$.

La lecture des données se fera en utilisant les deux horloges générées de fréquence respectivement $F_{1U}$ et $F_{1D}$ et en utilisant deux fronts consécutifs de la première horloge $H_{1U}$ et deux fronts consécutifs de la deuxième horloge $FH_{1D}$ (quatre fronts consécutifs). Ainsi la lecture s'effectue sur un front montant de $H_{1U}$, suivi d'un front descendant de $H_{1U}$, à une fréquence $F_{1U}$, suivi d'un front montant de $H_{1D}$, suivi d'un front descendant de $H_{1D}$ à une fréquence $F_{1D}$ avec les relations :

$$F_{1U} = F_{1D} = \frac{F_1}{2} = F_0 \pm \frac{F_0}{N_0}$$

La fréquence de l'émetteur $F_0$ et la fréquence du récepteur $F_0$ +/-$\varepsilon$ ne sont pas strictement identiques et la différence entre les deux équipements peut être $\varepsilon \leq \frac{F_0}{N_0}$. De plus, la transmission des données peut avoir lieu de manière sûre et certaine entre les deux équipements même si la phase des deux équipements est différente dans le cas où les deux équipements auraient la même fréquence de fonctionnement $F_0$.

Dans l'exemple donné à titre illustratif, la fréquence est de 1 Hz donc avec une période de 1s. Le nombre de bits à transmettre est de huit. Donc le décalage maximal toléré pour les horloges est de 1/8=0,125 s. La tolérance requise sera fonction de la taille du message.

Le récepteur lit le message selon les quatre fronts successifs :

Sur le front montant de $H_{1U}$, 441, M1 données reçues, 451,

Sur le front descendant de $H_{1U}$, 442, M2 données reçues 461,
Sur le front montant de $H_{1D}$, 443, M3 données reçues, 471,
Sur le front descendant de $H_{1D}$, 444, M4 données reçues 481.

Les quatre lectures M1, M2, M3 et M4 sont transmises au module de traitement des données qui va utiliser une méthode de correction d'erreur, par exemple un code CRC, afin de déterminer le ou les messages corrects.

Lorsqu'au moins un seul des quatre messages est correct, alors le module de traitement en déduit que le message d'origine transmis est perturbé. Dans ce cas, il ne prend pas en compte le message décodé et va recommencer un cycle de lecture et de décodage du message jusqu'à obtenir un décodage correct.

Dans le cas où au moins un message est décodé correctement, (message décodé correct et correspondant à un message fiable), après application d'un code correct d'erreur CRC, alors le module de traitement estime que le message est fiable, les données contenues sont aussi fiables et peuvent être utilisées pour le pilotage d'un dispositif.

Dans le cas de l'application de génération d'une puissance à une machine tournante, on assure ainsi une synchronisation dans la transmission du signal de commande des équipements émetteurs d'énergie vers la machine tournante et on évite ainsi des retours de courant via des lignes de liaison entre les différents équipements pouvant être néfastes au bon fonctionnement de la machine, voire la détériorer.

Le procédé selon l'invention permet avantageusement de faire une lecture du message en détectant d'éventuelles erreurs, sans utiliser une ligne d'horloge dédiée. La tolérance entre les horloges de chaque équipement du système n'a pas d'impact sur le résultat de lecture. Le procédé évite des retransmissions de message qui diminuent la bande passante utile.

## Revendications

**1.** - Procédé pour transmettre des données de manière fiable à au moins un équipement (23) pourvu d'une horloge initiale $H_1$ dans un système comprenant au moins un dispositif (20) émetteur de message travaillant avec une première horloge $H_0$ **caractérisé en ce qu'**il comporte au moins les étapes suivantes :

A partir de son horloge initiale $H_1$, à une fréquence initiale $F_1$ un équipement (23) génère au moins une première horloge $H_{1U}$ à partir d'un front montant de l'horloge initiale $H_1$ avec une fréquence $F_{1U}$ et une deuxième horloge $H_{1D}$ à partir d'un front descendant de l'horloge initiale $H_1$, avec une fréquence $F_{1D}$,
Les valeurs des fréquences étant définies de la manière suivante :

$$F_{1U} = F_{1D} = \frac{F_1}{2} = F_0 \pm \frac{F_0}{N_0}$$

Avec $F_0$ la fréquence initiale correspondant à l'équipement émetteur et $N_0$ le nombre de bits du message,
L'équipement exécute ensuite les étapes suivantes :

Lire les données reçues en utilisant la première horloge $H_{1U}$ à une fréquence $F_{1U}$ et la deuxième horloge $H_{1D}$ à une fréquence $F_{1D}$ et en utilisant au moins un premier front montant de la première horloge $H_{1U}$ suivi d'un front descendant de la première horloge $H_{1U}$ consécutif du premier front montant de la première horloge générée $H_{1U}$, puis un premier front montant de la deuxième horloge $H_{1D}$ suivi d'un front descendant de la deuxième horloge $H_{1D}$ consécutif du premier front montant de la deuxième horloge générée $H_{1D}$, les quatre fronts d'horloge utilisés étant consécutifs,
Décoder au moins les quatre messages en utilisant un code correcteur d'erreur,
Lorsqu'au moins un message est décodé correctement, utiliser les informations contenues dans ce message pour piloter un dispositif en liaison avec le ou lesdits équipements.

**2.** - Procédé selon la revendication 1 **caractérisé en ce que** la communication des données se fait en utilisant un protocole de communication mettant en œuvre une correction de type code correcteur d'erreur CRC.

**3.** - Procédé selon l'une des revendications 1 ou 2 **caractérisé en ce que** les équipements sont des onduleurs fournissant de l'énergie à une machine tournante (30).

**4.** - Système pour transmettre des données de manière fiable à au moins un équipement (23) configuré pour piloter un dispositif (30), le système comprenant un dispositif (20) ayant une horloge $H_0$ fonctionnant à une fréquence $F_0$

**caractérisé en ce qu'**un équipement (23) comporte au moins les éléments suivants :

Un module générateur d'horloge (24) configuré pour générer à partir de l'horloge initiale $H_1$ de l'équipement (23), à une fréquence initiale $F_1$, au moins une première horloge $H_{1U}$ à partir d'un front montant de l'horloge initiale $H_1$, avec une fréquence $F_{1U}$ et une deuxième horloge $H_{1D}$ à partir d'un front descendant de l'horloge initiale $H_1$, avec une fréquence $F_{1D}$,
Les valeurs des fréquences étant définies de la manière suivante :

$$F_{1U} = F_{1D} = \frac{F_1}{2} = F_0 \pm \frac{F_0}{N_0}$$

Avec $F_0$ la fréquence initiale correspondant à l'équipement émetteur et $N_0$ le nombre de bits du message,
Un module de traitement des données (26) configuré pour :

Lire les données reçues en utilisant au moins un premier front montant de la première horloge $H_{1U}$ et un front descendant de la première horloge $H_{1U}$ consécutif du premier front montant de la première horloge générée $H_{1U}$, puis lire les données reçues en utilisant un premier front montant de la deuxième horloge $H_{1D}$ et un front descendant de la deuxième horloge $H_{1D}$ consécutif du premier front montant de la deuxième horloge générée $H_{1D}$, les quatre fronts d'horloge utilisés étant consécutifs de $2F_1$, et décoder au moins les quatre messages en utilisant un code correcteur d'erreur,
Si la vérification d'au moins un message avec le code correcteur d'erreur est correcte, utiliser les informations contenues dans le message pour générer un signal de commande vers un dispositif en liaison avec le ou lesdits équipements.

**5.** - Système selon la revendication 4 **caractérisé en ce que** le dispositif émetteur de données (20) est configuré pour utiliser un protocole de communication ayant un correcteur d'erreur CRC.

**6.** - Système selon l'une des revendications 4 ou 5 **caractérisé en ce que** le dispositif émetteur de données (20) est en liaison avec plusieurs onduleurs (23) configurés pour générer de l'énergie et fournir ladite énergie à une machine tournante.

**Patentansprüche**

**1.** Verfahren zum zuverlässigen Übertragen von Daten an mindestens eine Anlage (23) versehen mit einem Anfangstakt $H_1$ in einem System mit mindestens einem Nachrichtensendegerät (20), das mit einem ersten Takt $H_0$ arbeitet, **dadurch gekennzeichnet, dass** es mindestens die folgenden Schritte aufweist:

Erzeugen, durch eine Anlage (23), auf der Basis ihres Anfangstakt $H_1$, mit einer Anfangsfrequenz $F_1$, mindestens eines ersten Takts $H_{1U}$ von einer ansteigenden Flanke des Anfangstakts $H_1$ mit einer Frequenz $F_{1U}$ und eines zweiten Takts $H_{1D}$ von einer abfallenden Flanke des Anfangstakts $H_1$ mit einer Frequenz $F_{1D}$,
wobei die Werte der Frequenzen wie folgt definiert sind:

$$F_{1U} = F_{1D} = \frac{F_1}{2} = F_0 \pm \frac{F_0}{N_0}$$

wobei $F_0$ die Anfangsfrequenz entsprechend der Sendeanlage und $N_0$ die Anzahl der Bits der Nachricht ist, wobei die Anlage dann die folgenden Schritte ausführt:

Lesen der empfangenen Daten unter Verwendung des ersten Takts $H_{1U}$ mit einer Frequenz $F_{1U}$ und des zweiten Takts $H_{1D}$ mit einer Frequenz $F_{1D}$ und unter Verwendung von mindestens einer ersten ansteigenden Flanke des ersten Takts $H_{1U}$, gefolgt von einer abfallenden Flanke des ersten Takts $H_{1U}$ nach der ersten ansteigenden Flanke des ersten erzeugten Takts $H_{1U}$, dann eine erste ansteigende Flanke des zweiten Takts $H_{1D}$ nach einer abfallenden Flanke des zweiten Takts $H_{1D}$, die auf die erste ansteigende Flanke des zweiten erzeugten Takts $H_{1D}$ folgt, wobei die vier verwendeten Taktflanken aufeinander folgen,
Decodieren mindestens der vier Nachrichten unter Verwendung eines Fehlerkorrekturcodes,

Verwenden, wenn mindestens eine Nachricht korrekt decodiert ist, der in dieser Nachricht enthaltenen Informationen zum Steuern eines Geräts, das mit der oder den Anlagen in Verbindung steht.

2. Verfahren nach Anspruch 1, **dadurch gekennzeichnet, dass** die Kommunikation der Daten unter Verwendung eines Kommunikationsprotokolls erfolgt, das eine Korrektur vom Typ Fehlerkorrekturcode CRC implementiert.

3. Verfahren nach einem der Ansprüche 1 oder 2, **dadurch gekennzeichnet, dass** die Anlagen Wechselrichter sind, die eine rotierende Maschine (30) mit Energie versorgen.

4. System zum zuverlässigen Übertragen von Daten an mindestens eine Anlage (23), die zum Steuern eines Geräts (30) konfiguriert ist, wobei das System ein Gerät (20) mit einem Takt $H_0$ umfasst, der mit einer Frequenz $F_0$ arbeitet, **dadurch gekennzeichnet, dass** eine Anlage (23) mindestens die folgenden Elemente umfasst:

ein Taktgenerator-Modul (24), konfiguriert zum Erzeugen, von dem Anfangstakt $H_1$ der Anlage (23), mit einer Anfangsfrequenz $F_1$, mindestens eines ersten Takts $H_{1U}$ von einer ansteigenden Flanke des Anfangstakts $H_1$ mit einer Frequenz $F_{1U}$ und eines zweiten Takts $H_{1D}$ von einer abfallenden Flanke des Anfangstakts $H_1$ mit einer Frequenz $F_{1D}$,
wobei die Werte der Frequenzen wie folgt definiert sind:

$$F_{1U} = F_{1D} = \frac{F_1}{2} = F_0 \pm \frac{F_0}{N_0}$$

wobei $F_0$ die Anfangsfrequenz entsprechend der Sendeanlage und $N_0$ die Anzahl der Bits der Nachricht ist,
ein Datenverarbeitungsmodul (26), konfiguriert zum:

Lesen der empfangenen Daten unter Verwendung mindestens einer ersten ansteigenden Flanke des ersten Takts $H_{1U}$ und einer abfallenden Flanke des ersten Takts $H_{1U}$ nach der ersten ansteigenden Flanke des ersten erzeugten Takts $H_{1U}$, dann Lesen der empfangenen Daten unter Verwendung einer ersten ansteigenden Flanke des zweiten Takts $H_{1D}$ und einer abfallenden Flanke des zweiten Takts $H_{1D}$ nach der ersten ansteigenden Flanke des zweiten erzeugten Takts $H_{1D}$, wobei die vier verwendeten Taktflanken um $2F_1$ aufeinander folgen, und Decodieren mindestens der vier Nachrichten unter Verwendung eines Fehlerkorrekturcodes,
Verwenden, wenn die Verifikation mindestens einer Nachricht mit dem Fehlerkorrekturcode korrekt ist, der in der Nachricht enthaltenen Informationen, um ein Steuersignal zu einem Gerät zu erzeugen, das mit der oder den Anlagen in Verbindung steht.

5. System nach Anspruch 4, **dadurch gekennzeichnet, dass** das Datensendegerät (20) zum Verwenden eines Kommunikationsprotokolls mit einer Fehlerkorrektur CRC konfiguriert ist.

6. System nach einem der Ansprüche 4 oder 5, **dadurch gekennzeichnet, dass** das Datensendegerät (20) mit mehreren Wechselrichtern (23) in Verbindung steht, konfiguriert zum Erzeugen der Energie und zum Versorgen einer rotierenden Maschine mit dieser Energie.

**Claims**

1. A method for transmitting data reliably to at least one item of equipment (23) provided with an initial clock $H_1$ in a system comprising at least one message-transmitting device (20) working with a first clock $H_0$, **characterised in that** it has at least the following steps:

from its initial clock $H_1$, at an initial frequency $F_1$, an item of equipment (23) generates at least one first clock $H_{1U}$ from a rising edge of the initial clock $H_1$ with a frequency $F_{1U}$ and a second clock $H_{1D}$ from a falling edge of the initial clock $H_1$, with a frequency $F_{1D}$,
the values of the frequencies being defined in the following way:

$$F_{1U} = F_{1D} = \frac{F_1}{2} = F_0 \pm \frac{F_0}{N_0}$$

where $F_0$ is the initial frequency corresponding to the transmitting item of equipment and $N_0$ is the number of bits of the message,
the item of equipment then executes the following steps:

reading the received data using the first clock $H_{1U}$ at a frequency $F_{1U}$ and the second clock $H_{1D}$ at a frequency $F_{1D}$ and using at least one first rising edge of the first clock $H_{1U}$ followed by a falling edge of the first clock $H_{1U}$ consecutive to the first rising edge of the generated first clock $H_{1U}$, then a first rising edge of the second clock $H_{1D}$ followed by a falling edge of the second clock $H_{1D}$ consecutive to the first rising edge of the generated second clock $H_{1D}$, the four clock edges used being consecutive,
decoding at least the four messages using an error-correcting code,
when at least one message is decoded correctly, using the information contained in this message to drive a device linked to said one or more items of equipment.

2. The method according to claim 1, **characterised in that** the data are communicated using a communication protocol implementing a correction of CRC error-correcting-code type.

3. The method according to one of claims 1 or 2, **characterised in that** the items of equipment are inverters delivering power to a rotating machine (30).

4. A system for transmitting data reliably to at least one item of equipment (23) configured to drive a device (30), the system comprising a device (20) having a clock $H_0$ operating at a frequency $F_0$ **characterised in that** an item of equipment (23) has at least the following elements:

a clock-generating module (24) configured to generate, from the initial clock $H_1$ of the item of equipment (23), at an initial frequency $F_1$, at least one first clock $H_{1U}$ from a rising edge of the initial clock $H_1$, with a frequency $F_{1U}$, and one second clock $H_{1D}$ from a falling edge of the initial clock $H_1$, with a frequency $F_{1D}$, the values of the frequencies being defined in the following way:

$$F_{1U} = F_{1D} = \frac{F_1}{2} = F_0 \pm \frac{F_0}{N_0}$$

where $F_0$ is the initial frequency corresponding to the transmitting item of equipment and $N_0$ is the number of bits of the message,
a data-processing module (26) configured to:

read the received data using at least a first rising edge of the first clock $H_{1U}$ and a falling edge of the first clock $H_{1U}$ consecutive to the first rising edge of the generated first clock $H_{1U}$, then read the received data using a first rising edge of the second clock $H_{1D}$ and a falling edge of the second clock $H_{1D}$ consecutive to the first rising edge of the generated second clock $H_{1D}$, the four clock edges used being consecutive by $2F_1$, and decode at least the four messages using an error-correcting code,
if the verification of at least one message with the error-correcting code is correct, use the information contained in the message to generate a drive signal toward a device linked to said one or more items of equipment.

5. The system according to claim 4, **characterised in that** the data-transmitting device (20) is configured to use a communication protocol having a CRC error corrector.

6. The system according to one of claims 5 or 6, **characterised in that** the data-transmitting device (20) is linked to multiple inverters (23) configured to generate power and to deliver said power to a rotating machine.

Fig.1A

Fig.1B

Fig. 2

EP 3 648 382 B1

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0805574 A
- US 20050081129 A